(19) **Europäisches Patentamt / European Patent Office / Office européen des brevets**

(11) **EP 4 427 529 B1**

(12) **EUROPEAN PATENT SPECIFICATION**

(45) Date of publication and mention
of the grant of the patent:
**17.06.2026   Bulletin 2026/25**

(21) Application number: **21807043.1**

(22) Date of filing: **05.11.2021**

(51) International Patent Classification (IPC):
*H04W 72/543* (2023.01)     *H04W 72/21* (2023.01)

(52) Cooperative Patent Classification (CPC):
**H04W 72/543;** H04W 72/21

(86) International application number:
**PCT/EP2021/080777**

(87) International publication number:
**WO 2023/078560 (11.05.2023 Gazette 2023/19)**

(54) **JITTER-LEVEL DEPENDENT SCHEDULING OF WIRELESS TRANSMISSIONS**

JITTEREBENENABHÄNGIGE PLANUNG VON DRAHTLOSEN ÜBERTRAGUNGEN

PLANIFICATION DES TRANSMISSIONS SANS FIL EN FONCTION DU NIVEAU DE GIGUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**11.09.2024   Bulletin 2024/37**

(73) Proprietor: **Telefonaktiebolaget LM Ericsson
(publ)
164 83 Stockholm (SE)**

(72) Inventors:
• **DUDDA, Torsten
41849 WASSENBERG (DE)**
• **PATEL, Dhruvin
52070 AACHEN (DE)**
• **SACHS, Joachim
191 34 SOLLENTUNA (SE)**

(74) Representative: **Ericsson
Patent Development
Torshamnsgatan 21-23
164 80 Stockholm (SE)**

(56) References cited:
**WO-A1-2020/064215     US-A1- 2020 107 339**

## Description

### Technical Field

The present invention relates to methods for controlling wireless transmissions and to corresponding devices, systems, and computer programs.

### Background

In wireless communication networks, e.g., based on the 4G (4th Generation) LTE (Long Term Evolution) or 5G (5th Generation) NR technology as specified by 3GPP (3rd Generation Partnership Project), there may also me a need to support communication which is subject to requirements concerning reliability or latency. For example, the 5G NR technology can support ultra-reliable low latency communication (URLLC), e.g., requiring with low latencies in the range of 1 ms and high reliability with transmit success likelihood of 99.999%. Ensuring such requirements may for example be relevant for industrial IoT (Internet of Things) use-cases, e.g., in motion control, process automation, or the like.

In the 5G NR technology, a QoS (Quality of Service) flow for a service may be configured, and a latency requirement and reliability requirement be defined by assigning the QoS flow a certain 5QI value. The 5QI value may for example be mapped to a certain packet delay budget, which defines the latency requirement, and to a certain maximum packet error rate, which defines the reliability requirement.

However, in a RAN (radio access network), there may be various effects that could lead to rather unpredictable delays in transmitting a data packet: For transmissions on a radio link, a RAN scheduler may decide when to exactly transmit the packet of a service over the radio link, in order to efficiently multiplex the transmission with transmissions from other services and/or other users. This may result in queueing delays of the data packet. Furthermore depending on arrival time of the data packet, the data packet might be delayed by some waiting time until the next transmission slot, which may also be referred to as frame alignment delay. Further, a transmissions over the radio link might fail, so that a retransmission becomes necessary, which would introduce additional delays. Further, on the receiver side it could be required to reorder received transmissions to ensure in-order delivery, which may also contribute to additional delays. Such delays may result in jitter of data packet transmissions.

The 3GPP Release 16 specifications also aim at supporting time sensitive networking (TSN) applications. For this purpose, for example time synchronization between an access node, in the 5G NR technology denoted as "gNB" and UE (user equipment) is supported. When integrating a the 5GS (5G system) and a TSN network, this capability may be used to deliver an internal clock of the 5GS as reference time delivery to a DS-TT (device side TSN translator) attached to the UE. An absolute reference time delivery mechanism which enables the UE and gNB to have the same time reference is specified in 3GPP TS 38.331 V16.6.0 (2021-09).

Some TSN applications and also other applications may also be subject to requirements concerning the amount of jitter, which is not addressed by the existing URLLC mechanisms. Accordingly, there is a need for techniques which allow for efficiently reducing or even avoiding jitter of wireless transmissions.

WO 2020/064215 A1 describes that scheduling of data packets transmitted by a UE may be adapted depending on jitter or delay of packet arrival from an external device connected by a non-wireless connection. US 2020/0107339 A1 describes that scheduling of communication of a UE may be based on a variable delay budget.

### Summary

The present invention is defined in the appended independent claims. Embodiments representing particular realizations of the invention are defined in the appended dependent claims. In the following description any reference to other embodiments or other aspects not falling under the scope of the appended claims has to be interpreted as additional supportive information for understanding the present invention.

According to an embodiment, a method of controlling wireless communication is provided According to the method, an access node of a wireless communication network schedules wireless transmissions between the access node and a wireless device. Further, the access node determines a level of jitter of the wireless transmissions. Based on the determined level of jitter, the access node adapts the scheduling of the wireless transmissions.

According to claim 1, a method of controlling wireless communication is provided. According to the method, a wireless device performs wireless transmissions based on scheduling by an access node of a wireless communication network. Further, the wireless device determines a level of jitter of the wireless transmissions. Further, the wireless device sends one or more reports indicating the determined level of jitter to the access node, to enable adaptation of the scheduling based on the level of jitter.

According to independent claim 7, an access node for a wireless communication network is provided. The access node is configured to schedule wireless transmissions between the access node and a wireless device. Further, the access node is configured to determine a level of jitter of the wireless transmissions. Further, the access node is configured to, based on the determined level of jitter, adapt the scheduling of the wireless transmissions.

According to independent claim 12, an access node for a wireless communication network is provided. The access node comprises at least one processor and a memory. The memory contains instructions executable by said at least one processor, whereby the access node is operative to schedule wireless transmissions between the access node and a wireless device. Further, the memory contains instructions executable by said at least one processor, whereby the access node is operative to determine a level of jitter of the wireless transmissions. Further, the memory contains instructions executable by said at least one processor, whereby the access node is operative to, based on the determined level of jitter, adapt the scheduling of the wireless transmissions.

According to independent claim 14, a wireless device for operation in a wireless communication network is provided. The wireless device is configured to perform wireless transmissions based on scheduling by an access node of the wireless communication network. Further, the wireless device is configured to determine a level of jitter of the wireless transmissions. Further, the wireless device is configured to send one or more reports indicating the determined level of jitter to the access node, to enable adaptation of the scheduling based on the level of jitter.

Details of such embodiments and further embodiments will be apparent from the following detailed description of embodiments.

Brief Description of the Drawings

Fig. 1 schematically illustrates a wireless communication network.
Fig. 2 schematically illustrates a TSN application scenario.
Fig. 3 schematically illustrates an example of downlink jitter compensation processes.
Fig. 4 schematically illustrates an example of uplink jitter compensation processes.
Fig. 5 schematically illustrates an example of scheduling processes.
Fig. 6 shows a flowchart for schematically illustrating a method.
Fig. 7 shows an exemplary block diagram for illustrating functionalities of an access node implementing functionalities corresponding to the method of Fig. 6.
Fig. 8 shows a flowchart for schematically illustrating a further method.
Fig. 9 shows an exemplary block diagram for illustrating functionalities of a wireless device implementing functionalities corresponding to the method of Fig. 8.
Fig. 10 schematically illustrates structures of an access node.
Fig. 11 schematically illustrates structures of a wireless device.

Detailed Description

In the following, concepts in accordance with exemplary embodiments of the invention will be explained in more detail and with reference to the accompanying drawings. The illustrated embodiments relate to controlling of wireless transmissions between a wireless device (WD) and an access node of a wireless communication network. The wireless communication network may be based on the 5G NR technology specified by 3GPP. However, other technologies could be used as well, e.g., the 4G LTE technology specified by 3GPP. The WD may correspond to various types of UEs or other types of WDs. As used herein, the term "wireless device" (WD) refers to a device capable, configured, arranged, and/or operable to communicate wirelessly with network nodes and/or other WDs. Unless otherwise noted, the term WD may be used interchangeably herein with UE. Communicating wirelessly may involve transmitting and/or receiving wireless signals using electromagnetic waves, radio waves, infrared waves, and/or other types of signals suitable for conveying information through air. In some embodiments, a WD may be configured to transmit and/or receive information without direct human interaction. For instance, a WD may be designed to transmit information to a network on a predetermined schedule, when triggered by an internal or external event, or in response to requests from the network. Examples of a WD include, but are not limited to, a smart phone, a mobile phone, a cell phone, a Voice over IP (VoIP) phone, a wireless local loop phone, a desktop computer, a Personal Digital Assistant (PDA), a wireless camera, a gaming console or device, a music storage device, a playback appliance, a wearable terminal device, a wireless endpoint, a mobile station, a tablet, a laptop, Laptop Embedded Equipment (LEE), Laptop Mounted Equipment (LME), a smart device, a wireless Customer Premise Equipment (CPE), a vehicle mounted wireless terminal device, a connected vehicle, etc. In some examples, in an Internet of Things (IoT) scenario, a WD may also represent a machine or other device that performs monitoring and/or measurements, and transmits the results of such monitoring and/or measurements to another WD and/or a network node. The WD may in this case be a Machine-to-Machine (M2M) device, which may in a 3GPP context be referred to as a Machine-Type Communication (MTC) device. As one particular example, the WD may be a UE implementing the 3GPP

Narrowband IoT (NB-IoT) standard. Particular examples of such machines or devices are sensors, metering devices such as power meters, industrial machinery, home or personal appliances (e.g., refrigerators, televisions, etc.), or personal wearables (e.g., watches, fitness trackers, etc.). In other scenarios, a WD may represent a vehicle or other equipment that is capable of monitoring and/or reporting on its operational status or other functions associated with its operation. A WD as described above may represent the endpoint of a wireless connection, in which case the device may be referred to as a wireless terminal. Furthermore, a WD as described above may be mobile, in which case it may also be referred to as a mobile device or a mobile terminal.

In the illustrated concepts, a level of jitter of user plane traffic may be reported to an access node of the wireless communication network, e.g., a gNB ("next generation Node B") of the NR technology or an eNB ("evolved Node B") of the LTE technology. The access node may then utilize the reported level of jitter as input for scheduling the user plane traffic. Further, deterministic RAN latency may be provided based on playout buffering in a RAN part of the wireless communication network.

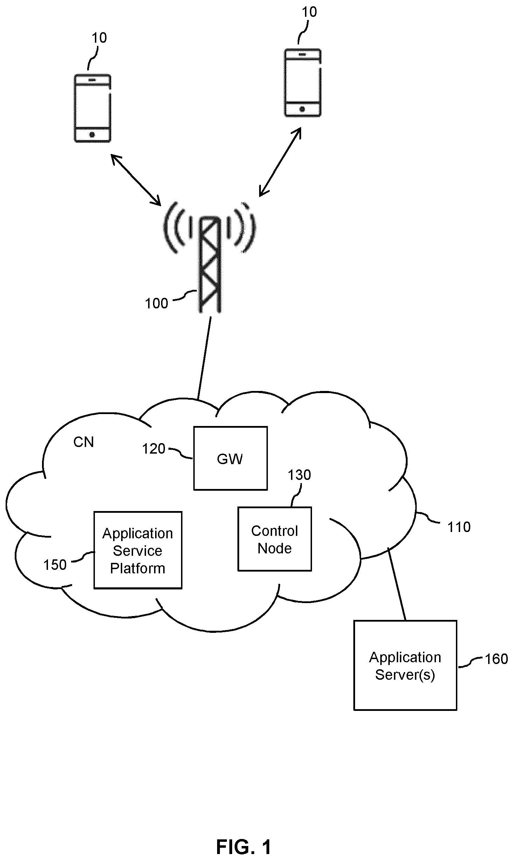

Fig. 1 illustrates exemplary structures of the wireless communication network. In particular, Fig. 1 shows multiple UEs 10 which are served by access nodes 100 of the wireless communication network. Here, it is noted that each access node 100 may serve a number of cells within the coverage area of the wireless communication network. Depending on the supported RAT(s) each access nodes 100 may correspond to a gNB of the NR technology or an eNB of the LTE technology. The access nodes 100 may each be regarded as being part of an RAN of the wireless communication network. Further, Fig. 1 schematically illustrates a CN (Core Network) 110 of the wireless communication network. In Fig. 1, the CN 110 is illustrated as including a GW (gateway) 120 and one or more control node(s) 130. The GW 120 may be responsible for handling UP traffic of the UEs 10, e.g., by forwarding user data traffic from a UE 10 to a network destination or by forwarding user data traffic from a network source to a UE 10. Here, the network destination may correspond to another UE 10, to an internal node of the wireless communication network, or to an external node which is connected to the wireless communication network. Similarly, the network source may correspond to another UE 10, to an internal node of the wireless communication network, or to an external node which is connected to the wireless communication network. The control node(s) 130 may be used for controlling the user data traffic, e.g., by providing control data to the access node 100, the GW 120, and/or to the UE 10. Such control data may in particular have the purpose of configuring the above-mentioned playout buffers and/or for controlling scheduling of wireless transmissions by the access node.

As illustrated by double-headed arrows, the access node 100 may send DL transmissions to the UEs, and the UEs may send UL transmissions to the access nodes 100. The DL transmissions and UL transmissions may be used to provide various kinds of services to the UEs, e.g., a voice service, a multimedia service, or a data service. Such services may be hosted in the CN 110, e.g., by a corresponding network node. By way of example, Fig. 1 illustrates an application service platform 150 provided in the CN 110. Further, such services may be hosted externally, e.g., by an AF (application function) connected to the CN 110. By way of example, Fig. 1 illustrates one or more application servers 160 connected to the CN 110. The application server(s) 160 could for example connect through the Internet or some other wide area communication network to the CN 110. The application service platform 150 may be based on a server or a cloud computing system and be hosted by one or more host computers. Similarly, the application server(s) 160 may be based on a server or a cloud computing system and be hosted by one or more host computers. The application server(s) 160 may include or be associated with one or more AFs that enable interaction with the CN 110 to provide one or more services to the UEs 10, corresponding to one or more applications. These services or applications may generate the user data traffic conveyed by the DL transmissions and/or the UL transmissions between the access node(s) 100 and the respective UE 10. Accordingly, the application server(s) 160 may include or correspond to the above-mentioned network destination and/or network source for the user data traffic. In the respective UE 10, such service may be based on an application (or shortly "app") which is executed on the UE 10. Such application may be pre-installed or installed by the user. Such application may generate at least a part of the UP traffic between the UE 10 and the access node 100.

In the illustrated concepts, deterministic latency, i.e., no jitter or jitter below a threshold, may be achieved by providing a playout buffer at both ends of a radio link, in particular on both ends of a radio bearer. In the scenario of Fig. 1, such playout buffer could thus be provided in the UE 10 and the access node 100. The playout buffer at the UE 10 may be configured with a size which allows for compensating jitter of DL user plane data received by the UE 10 from the access node 100. The playout buffer at the access node 100 may be configured with a size which allows for compensating jitter of UL user plane data received by the access node 100 from the UE 10. For the DL user plane data, the playout buffer at the UE 10 may be configured with a size corresponding to a preconfigured DL playout delay, in the following denoted as $tconf_{DL}$. For the UL plane data, the playout buffer at the access node 100 may be implemented an egress point of the access node 100 to higher protocol layers, e.g., between transport network and core network and may be configured with a size with a size corresponding to a preconfigured UL playout delay, in the following denoted as $tconf_{DL}$. The playout delays $tconf_{DL}$ and $tconf_{UL}$ may be set based on a desired deterministic latency and may be configured by the CN 110, e.g., a control or management node in the CN 110, such as the above-mentioned control node 130. For DL user plane data, the access node 100 will act as transmitter and the UE 10 will act as receiver, which uses the DL playout buffer for delivering the received DL user plane data at a desired time towards its destination, e.g., to a device side TSN system. For UL user plane data, the UE 10 will act as transmitter and the access node 100 will act as receiver, which uses the UL playout buffer for delivering the received UL user plane data at a desired time instance towards its destination, e.g., a network side TSN system. In the following, it will be assumed that the delivery of the data to and from the playout buffers occurs in data packets, which may correspond to various kinds of PDU (Protocol Data Unit).

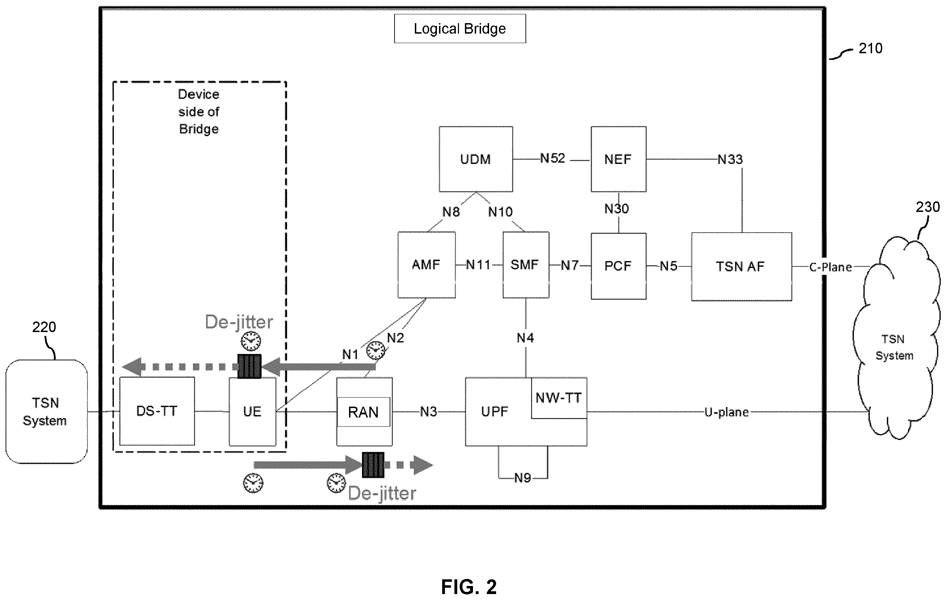

Fig. 2 shows an example of implementing the illustrated concepts for achieving deterministic latency in a 5G system (5GS). In the example of Fig. 2, it is further assumed that the 5GS is used for providing a logical bridge 210 between a device-side TSN systems 220 and a network-side TSN system 230. Fig. 2 also shows exemplary CN nodes of the 5GS, namely a UPF (User Plane Function), an AMF (Access and Mobility Management Function), an SMF (Session Management Function), a PCF (Policy Control Function), a UDM (Unified Data Management), an NEF (Network Exposure Function), and a TSN AF (Time Sensitive Networking Application Function). These CN nodes and interfaces connecting the CN nodes can be implemented as specified in 3GPP TS 23.501 V16.10 (2021-09).

Further, Fig. 2 shows a UE connected to a RAN. In the example of Fig. 2, a DS-TT connects the device-side TSN system 220 to a UE, e.g., corresponding to one of the UEs 10 of Fig. 1. The network-side TSN system 230 is connected via a NW-TT (network side TSN translator), implemented at the UPF, to the RAN. User plane data (in Fig. 2 denoted by "U-plane") are thus conveyed via the DS-TT, UE, RAN, UPF, and NW-TT between the device-side TSN 220 system and the network-side TSN system. As further illustrated, control plane data (in Fig. 2 denoted by "C-plane") for the user plane connection may be exchanged between the network side TSN system 230 and the TSN AF and then further be handled by the PCF, SMF, AMF, NEF, and/or UDM. The UPF may for example be implemented by the GW 120 of Fig. 1, the RAN may include a gNB which may in turn correspond to the access node 100 of Fig. 1, and the AMF, SMF, PCF, UDM, NEF, and TSN AF may be implemented by the control node(s) 130 of Fig. 1.

For reducing or avoiding jitter by means of the playout buffer, the transmitter and the receiver may be time-synchronized, so that the transmitter and the receiver can operate on the basis of a common reference time, e.g., the 5G GM (grandmaster) clock. Further, timestamps may be indicated from the transmitter to the receiver. When the transmitter sends a data packet, it includes a timestamp of the transmission time into the data packet. The timestamp is based on the common reference time, e.g., may correspond to the value of the common reference time when sending the data packet. When receiver receives the data packet from the radio link it reads the timestamp included in the data packet. Based on the timestamp and the common time reference, the receiver calculates the transmission time. The transmission time may be calculated as the difference between the timestamp and the value of the common time reference at reception of the data packet. The receiver may then remove the timestamp from the data packet, buffer the data packet in the playout buffer, and deliver the packet after a predefined nominal transmission time from the playout buffer. That is to say, the receiver delays the delivery of the data packet from the playout buffer until the predefined nominal transmission time is reached.

The timestamp may be included in a PDCP header of the data packet, e.g., when the data packet is received from a higher protocol layer, e.g., from an SDAP (Service Data Adaptation Protocol) layer. It is noted that in the NR technology a gNB may include a CU (centralized unit) and one or more DUs (distributed units). Typically, the PDCP payload data is ciphered in the CU and thus not readable at a DU. However, the PDCP header of the data packet would also be readable at the DU. Accordingly, for DL data packets including the timestamp in the PDCP header may be accomplished at the CU or the DU. When time synchronization to the common reference time is available at the CU, including the timestamp into the data packet can be performed at the CU. If the time synchronization to the common reference time is not available at the CU, but only at the DU, including the timestamp into the data packet may be accomplished at the DU. The timestamp included at the DU may then correspond to the current value of the common reference time minus the time needed for processing the data packet in the CU, in the following also denoted as CU processing delay, and minus the time for transferring the data packet on the interface between CU and DU, in the following also denoted as CU-DU interface delay. If the timestamp is included at an output side of the DU, i.e., at actual radio transmission, also processing time in the DU, in the following denoted as DU processing delay, may be subtracted. The DU processing delay may include time spent for queuing of the data packet in the DU and time required for actual processing of the data packet in the DU. The CU may communicate the CU processing delay of the data packet in the CU to the DU. The CU processing delay may include time spent for queuing of the data packet in the CU and time required for actual processing of the data packet in the CU. The CU can include the CU processing delay into the PDCP header of the data packet. The CU-CU interface delay can be measured by DU itself. In some cases, this CU-DU interface delay can be assumed to be negligible. The DU could then calculate the value of the timestamp TS included in the data packet as:

$$TS = T_R - T_{PCU} - T_{CU\text{-}DU} - T_{PDU}, \tag{1}$$

where $T_R$ denotes the common reference time, $T_{PCU}$ denotes the CU processing delay, $T_{CU\text{-}DU}$ denotes the CU-DU interface delay, and $T_{PDU}$ denotes the DU processing delay.

As mentioned above, the CU processing time may be included in the PDCP header of the data packet transferred from the CU to the DU, e.g., in a timestamp field. Before the data packet is output from the DU, the CU processing delay may be overwritten with the timestamp calculated by the DU. Accordingly, even if the timestamp included into the data packet

5

transmitted on the radio link is introduced at the DU, the timestamp may still indicate the time when the data packet was received for transmission from higher layers at an ingress point of the CU.

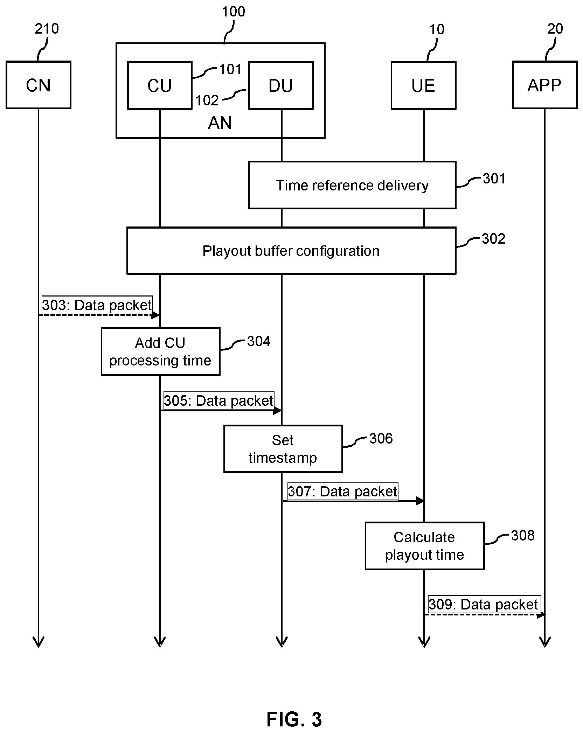

Fig. 3 illustrates exemplary processes for further illustrating the utilization of the DL playout buffer for providing deterministic delay of DL user plane data. The processes of Fig. 3 involve the CN 210, the access node (AN) 100, the UE 10, and an application (APP) 20 executed on the UE 10. The CN 210 is assumed to provide DL user plane data which are destined to be used in APP 20. The AN 100 is assumed to be a gNB and include a CU 101 and a DU 102.

As illustrated by block 301, the processes may involve time reference delivery between the UE 10 and the DU 101 of the AN 100, which in particular may involve synchronization of the DU 102 and the UE 10 to the common reference time. For this purpose, the DU 102 and the UE 10 may exchange synchronization information.

As illustrated by block 302, the processes may also involve playout buffer configuration by the AN 100 and the UE 10. This may for example include setting the playout buffers in the AN 100 and the UE 10 to an appropriate size which allows for compensating expected jitter effects, without excessively adding delay to the transmission of the data.

The processes of blocks 301 and 302 may be regarded as preparatory steps and do not need to be performed for each individual data transmission. For example, the processes of blocks 301 and 302 could be performed upon establishment of the radio link between the AN 100 and the UE 10.

In the processes of Fig. 3, the CU 101 of the AN 100 receives a data packet 303 from the CN 210. The data packet includes DL user plane data. The CU 101 then transfers the data packet 305 to the DU 102. Before outputting the data packet 305 to the DU 102, the CU 101 adds the CU processing delay to the data packet, e.g., by including the value of the CU processing delay into the timestamp field of the PDCP header of the data packet, as illustrated by block 304. The CU 101 may also locally store the ingress time of the data packet 303. The ingress time of the data packet 303 may correspond to the value of the common reference time upon arrival of the data packet at the CU 101.

As illustrated by block 306, the DU 102 then sets the timestamp of the data packet to be conveyed on the radio link. For example, the DU 102 may calculate the value of the timestamp according to relation (1). In some cases, the DU 102 may neglect the CU-DU interface delay in the calculation. The timestamp may overwrite the timestamp field of the data packet 305 that was received from the CU 101. The DU 102 then sends the data packet 307 with the timestamp over the radio link to the UE 10.

Upon receiving the data packet 307, the UE 10 uses the timestamp to calculate a playout buffer time of the data packet 307. In particular, the UE 10 may calculate the DL playout buffer time $TB_{DL}$ as:

$$TB_{DL} = tconf_{DL} - T_{delay} \qquad (2),$$

where $T_{delay}$ is the transmission delay of the data packet over the RAN, in particular from the ingress point of the CU 101 to the ingress point of the UE 10. The UE 10 can calculate the transmission delay as the value of the common reference time upon arrival of the data packet 307 at the ingress point of the UE 10 and the value of the timestamp included in the data packet 307. Here, the ingress point of the UE 10 may correspond to the interface of the PDCP layer in the UE 10 to lower protocol layers. After expiry of the DL playout buffer time $TB_{DL}$, the UE 10 delivers the data packet to higher protocol layers, in particular to the APP 20, as illustrated by 309.

It is noted that these processes could be simplified in the case of the AN 100 not being based on a split architecture with the CU 101 and the DU 102. In that case, a processing time in the AN 100, substantially corresponding to the combination of CU processing delay and DU processing delay, could directly be considered when setting the timestamp before outputting the data packet to the radio link, without requiring internal indication of delay contributions within the AN 100.

For UL data packets, the UE 10 may include the timestamp into the data packet when receiving UL user plane data to be transmitted over the radio link. This may be accomplished in a PDCP layer entity of the UE 10, which receives the UL user plane data from higher protocol layers. When the data packet is received by the AN 100, the AN 100 may use the timestamp included in the data packet for calculating a UL playout buffer time $TB_{UL}$ as:

$$TB_{UL} = tconf_{UL} - T_{delay} \qquad (3),$$

where $T_{delay}$ is the transmission delay of the data packet over the RAN, in particular from the ingress point of the UE 10 to an ingress point of the AN 100. The AN 100 can calculate the transmission delay as the value of the common reference time upon arrival of the data packet at the ingress point of the AN 100 and the value of the timestamp included in the received data packet. After expiry of the UL playout buffer time $TB_{UL}$, the AN 100 delivers the data packet to higher protocol layers. In the case of using a split architecture of the AN 100, with a CU and one or more DUs, the UL playout buffer may be provided at the CU 101, while the calculation of the UL playout buffer time $TB_{UL}$ is performed at the DU. In that case, the DU may calculate a time left to deliver $T_{LD}$ as:

$$T_{LD} = tconf_{UL} - T_{delay} - T_{PDU} - T_{CUDU} \qquad (4),$$

and further indicate this time left to deliver to the CU, e.g., by including the value of $T_{LD}$ into the timestamp of the data packet transferred from the DU to the CU. As can be seen, the $T_{LD}$ may further take into account any DU processing delay of the data packet and any CU-DU interface delay of the data packet. The CU may then calculate the remaining UL playout buffer time $TB_{UL}$ by subtracting any CU processing delay:

$$TB_{UL} = T_{LD} - T_{PCU} \qquad (5).$$

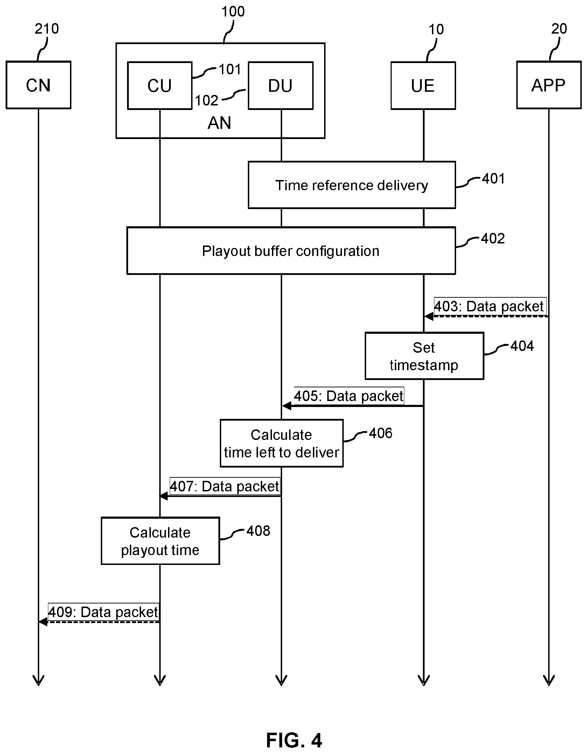

Fig. 4 illustrates exemplary processes for further illustrating the utilization of the UL playout buffer for providing deterministic delay of UL user plane data. The processes of Fig. 4 involve the CN 210, the access node (AN) 100, the UE 10, and an application (APP) 20 executed on the UE 10. The APP 20 is assumed to provide UL user plane data to the CN 210, e.g., to a user plane gateway such as the above-mentioned GW 120 or UPF. The AN 100 is assumed to be a gNB and include a CU 101 and a DU 102.

As illustrated by block 401, the processes may involve time reference delivery between the UE 10 and the DU 101 of the AN 100, which in particular may involve synchronization of the DU 102 and the UE 10 to the common reference time. For this purpose, the DU 102 and the UE 10 may exchange synchronization information.

As illustrated by block 402, the processes may also involve playout buffer configuration by the AN 100 and the UE 10. This may for example include setting the playout buffers in the AN 100 and the UE 10 to an appropriate size which allows for compensating expected jitter effects, without excessively adding delay to the transmission of the data.

The processes of blocks 401 and 402 may be regarded as preparatory steps and do not need to be performed for each individual data transmission. For example, the processes of blocks 401 and 402 could be performed upon establishment of the radio link between the AN 100 and the UE 10. In some cases, the processes of Fig. 4 could also be combined with processes as described in connection with Fig. 3, and the preparatory steps 401, 402 of Fig. 4 could be combined with the preparatory steps of Fig. 3, so that only a single step of time reference delivery and a single step of playout buffer configuration is needed.

In the processes of Fig. 4, a data packet 403 for transmission over the radio link arrives at an ingress point of the UE 10. In the illustrated example, the data packet 403 is provided by the APP 20. The ingress point of the UE 10 may correspond to an interface of the PDCP layer to higher protocol layers. As indicated by block 404, the UE 10 sets the timestamp to be included into the data packet. Here, the UE 10 may set the timestamp to the value of the common reference time when the data packet arrives at the ingress point of the UE 10. The UE 10 may then add the timestamp to the PDCP header of the data packet and send the data packet 405 with the timestamp over the radio link to the AN 100.

At the AN 100, the data packet 405 is received by the DU 102. The DU 102 reads the timestamp of the received packet 405 and calculates the time left to deliver $T_{LD}$ according to relation (4), as indicated by block 406. The DU 102 then includes the calculated value of the time left to deliver $T_{LD}$ in the PDCP header of the PDCP packet, before further transferring it to the CU 101, as indicated by 407.

The CU 101 then receives the data packet 407 from the DU 101 and uses the time left to deliver indicated in the data packet 407 to calculate the remaining UL playout buffer time $TB_{UL}$ according to relation (5). After expiry of the UL playout buffer time $TB_{UL}$, the CU 101 delivers the data packet to higher protocol layers, in particular to the CN 210, as illustrated by 409.

It is noted that in the above processes the timestamps which are included in the PDCP header may be limited to a certain range. Accordingly, only a portion of the actual timestamp value may be indicated in the PDCP header, e.g., terms of a number of the least significant bits. A wrap around, by re-starting at zero, can be used for this range limited timestamp field when the actual timestamp value exceeds the an upper limit. Assuming for example a maximum possible allowed latency of 50 ms, and a desired accuracy of playout buffering of 1 $\mu$s, <16bits would be required for encoding the 50000 possible values of the range limited timestamps.

However, even when utilizing the above-described playout buffering in the RAN, there is a risk that excessive jitter occurs, e.g., the becomes higher than the inter-arrival times of data packets. In such cases, the playout buffer would not be sufficient to compensate the jitter as reception of the data packet from the radio link would occur after the data packet is supposed to be further delivered from the playout buffer. In view of such possibility, the illustrated concepts may further involve that the UE 10 monitors the jitter of the data packets received by the UE 10 and reports the observed jitter to the AN 100, which is responsible for scheduling the transmission of the data packets over the radio link. The AN 100 may then in turn adapt the scheduling of future data packets to ensure lower jitter for these future data packets. Such adaptation of the scheduling may for example involve increasing the number of resources which are available for the radio link or, in the case of multi-link connectivity, adaptation of selection between multiple radio links established between the AN 100 and the UE 10.

For enabling the monitoring of the jitter, the UE 10 may be provided with a jitter monitor which monitors the jitter on a Data Radio Bearer (DRB) per packet basis. This may be accomplished by using the DL playout buffer configured at the UE 10. The jitter monitor may operate by calculating the transmission delay of each data packet and comparing the transmission delay to the configured value of $tconf_{DL}$. If the observed transmission delay exceeds $tconf_{DL}$, the UE 10 stores the difference between the observed transmission delay and $tconf_{DL}$. This difference may quantify the observed jitter and is in the following also denoted as jitter value. If the UE 10 observes multiple such events in which the observed transmission delay exceeds $tconf_{DL}$, the UE 10 sends a report of the detected jitter to the access node 100. The report may for example include the observed jitter values, and/or a mean value of the observed jitter values. Such monitoring of the jitter may be performed for multiple UEs 10 connected to the access node 100. The report can be transmitted periodically and/or in response to one or more triggering events. In addition or as an alternative to comparing the observed transmission delay to $tconf_{DL}$, the jitter monitor could also compare the observed transmission delay to a threshold which corresponds to a fraction of $tconf_{DL}$, e.g., 80-90% of $tconf_{DL}$. This may allow the access node 100 to adapt its scheduling for the UE 10 in such a way that transmission delays in excess of $tconf_{DL}$ can be avoided as far as possible and jitter thus be compensated almost completely.

The UE 10 may send the report in a MAC (Medium Access Control) control element and/or in an RRC (Radio Resource Control) message. Such RRC message could for example be an RLF (Radio Link Failure) indication message, in particular a secondary RLF failure indication message, or some other RRC message.

In some cases, the detection of jitter beyond a configurable threshold may trigger an RLF event. In such RLF event, the UE 10 may stop transmission and reception on the respective radio link and attempt to re-establish the connection to the access node 100.

Based on the reports of jitter received from the UE(s) 10, the access node 100 may control scheduling of radio transmissions of the UE 10 which reported the jitter and/or the scheduling of one or more other UEs 10. For this purpose, a scheduler which performs the scheduling may be informed about the occurrence of the jitter, about the UE(s) 10 that reported the jitter, and/or about a time during which the jitter was observed.

Based on the reported jitter, the access node 100 may adapt the scheduling as follows: If the reported jitter is in excess of a maximum jitter allowed for the UE 10, the access node 100 may indicate to higher layers that that jitter requirements of the UE 10 are not fulfilled. This may for example be accomplished in a congestion indication to the higher layers. If the reported jitter exceeds a certain threshold, but is lower than the maximum jitter allowed for the UE 10, the access node 100 may allocated more resources to the radio link of the UE 10 to avoid that the maximum allowed jitter is exceeded for future data packets. The access node 100 can for example prioritize a service of the UE 10 affected by the jitter in relation to other services or other UEs 10. The access node 100 may also decide to increase the amount of resources allocated to radio link of the UE 10 affected by the jitter. Further, the access node 100 may configure the UE 10 affected by the jitter with low latency-features, such as shortened transmission time slots.

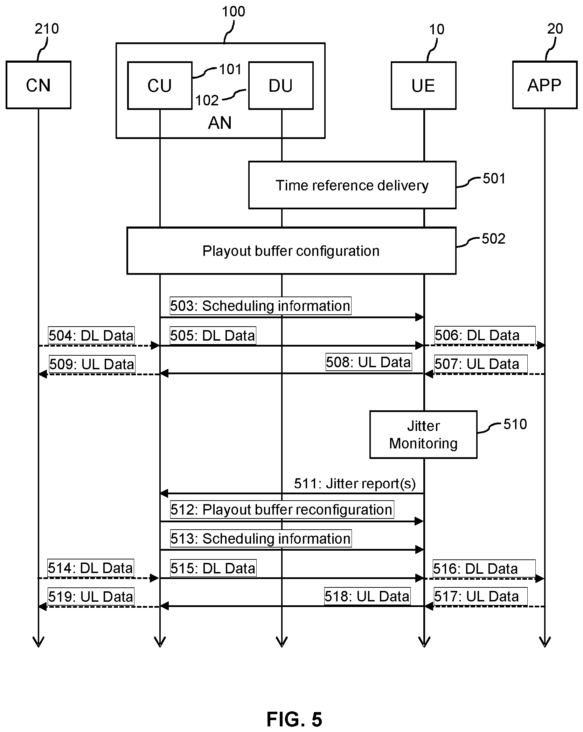

Fig. 5 illustrates exemplary processes for further illustrating the adaptation of scheduling based on reported jitter. The processes of Fig. 5 involve the CN 210, the access node (AN) 100, the UE 10, and an application (APP) 20 executed on the UE 10. The CN 210 is assumed to provide DL user plane data which are destined to be used in APP 20. Further, the APP 20 is assumed to provide UL user plane data towards the CN 210 e.g., to a user plane gateway such as the above-mentioned GW 120 or UPF. The AN 100 is assumed to be a gNB and include a CU 101 and a DU 102.

As illustrated by block 501, the processes may involve time reference delivery between the UE 10 and the DU 101 of the AN 100, which in particular may involve synchronization of the DU 102 and the UE 10 to the common reference time. For this purpose, the DU 102 and the UE 10 may exchange synchronization information.

As illustrated by block 502, the processes may also involve playout buffer configuration by the AN 100 and the UE 10. This may for example include setting the playout buffers in the AN 100 and the UE 10 to an appropriate size which allows for compensating expected jitter effects, without excessively adding delay to the transmission of the data.

The processes of blocks 501 and 502 may be regarded as preparatory steps and do not need to be performed for each individual data transmission. For example, the processes of blocks 501 and 502 could be performed upon establishment of the radio link between the AN 100 and the UE 10. In some cases, the processes of Fig. 5 could also be combined with processes as described in connection with Fig. 3 and/or 4, and the preparatory steps 501, 502 of Fig. 5 could be combined with the preparatory steps of Fig. 3 and/or of Fig. 4, so that only a single step of time reference delivery and a single step of playout buffer configuration is needed. The configuration and utilization of the DL playout buffer for compensating jitter of the DL user plane traffic may be as explained for the processes of Fig. 3. The configuration and utilization of the UL playout buffer for compensating jitter of the UL user plane traffic may be as explained for the processes of Fig. 4.

In the processes of Fig. 5, the AN 100 provides scheduling information 503 to the UE 10. The scheduling information 503 schedules the transmission of DL user plane data to the UE 10 and/or schedules the transmission of UL user plane data from the UE 10. In the example of Fig. 5, it is assumed that the scheduling information 503 is provided by the CU 101 of the AN 100. By way of example, Fig. 5 illustrates that the CN 210 provides DL user plane data 504 to the AN 100, which are further sent in a DL radio transmission via the radio link to the UE 10, as illustrated by 505. The UE 10, then provides the received DL user plane data to the APP 20, as illustrated by 506. This may involve jitter compensated transmission of one or more data packets as described in connection with Fig. 3, with the DL radio transmission being scheduled by the scheduling information 503. The scheduling information 503 may for example indicate radio resources to be used for the DL radio transmission, e.g., in terms of one or more resource blocks. In the case of the UE 10 having multi-link connectivity, the scheduling information 503 may also include information for selection of one or more radio links to be used for the DL radio transmission. Further, Fig. 5 illustrates that the APP 20 provides UL user plane data 507 to the UE 10, which are further sent in a UL radio transmission via the radio link to the AN 100, as illustrated by 508. The AN 100, then provides the received UL user plane data to the CN 210, as illustrated by 509. This may involve jitter compensated transmission of one or more data packets as described in connection with Fig. 4, with the UL radio transmission being scheduled by the scheduling information 503. The scheduling information 503 may for example indicate radio resources to be used for the UL radio transmission, e.g., in terms of one or more resource blocks. In the case of the UE 10 having multi-link connectivity, the scheduling information 503 may also include information for selection of one or more radio links to be used for the UL radio transmission.

As illustrated by block 510, the UE 10 monitors jitter affecting the received UL user plane data. If the jitter level exceeds a threshold, e.g., corresponding to $tconf_{UL}$ or a fraction thereof, the UE 10 provides one or more jitter reports 511 to the AN 100, e.g., in a MAC CE or RRC message. In a similar manner, the AN 100 could also monitor jitter affecting the received DL user plane data and detect an excess jitter event if the jitter level exceeds a threshold, e.g., corresponding to $tconf_{DL}$ or a fraction thereof.

Based on the detected jitter levels, the AN 100 may decide to reconfigure the DL playout buffer and/or the UL playout buffer. For this purpose, the AN 100 may provide playout buffer reconfiguration information to the UE 10, as illustrated by 512. For example, in response to detecting an excessive jitter level of the DL user plane data, the AN 100 may decide to increase the value of $tconf_{DL}$. Similarly, in response to detecting an excessive jitter level of the UL user plane data, the AN 100 may decide to increase the value of $tconf_{UL}$.

Further, the AN 100 may use the detected jitter levels as a basis for adapting the scheduling of the radio transmissions between the AN 100 and the UE 10, with the aim of avoiding occurrence of excess jitter levels in future radio transmissions. For example, in response to detecting an excessive jitter level of the DL user plane data, the AN 100 may decide to increase the amount of radio resources allocated for DL radio transmissions of the UE 10. Alternatively or in addition, the AN 100 may decide to prioritize the DL radio transmissions to the UE 10, e.g., in relation to other UEs 10 or other services. Further, the access node 100 may decide to adapt the selection between multiple radio links established between the AN 100 and the UE 10 by scheduling the DL radio transmissions on a radio link offering a lower latency. Such adaptation of the scheduling may be accomplished in a service specific manner, e.g., per DRB. Similarly, in response to detecting an excessive jitter level of the UL user plane data, the AN 100 may decide to increase the amount of radio resources allocated for UL radio transmissions of the UE 10. Alternatively or in addition, the AN 100 may decide to prioritize the UL radio transmissions from the UE 10, e.g., in relation to other UEs 10 or other services. Further, the access node 100 may decide to adapt the selection between multiple radio links established between the AN 100 and the UE 10 by scheduling the UL radio transmissions on a radio link offering a lower latency. Such adaptation of the scheduling may again be accomplished in a service specific manner, e.g., per DRB. Based on the adapted scheduling, the AN 100 sends new scheduling information 513 to the UE 10.

As illustrated, the new scheduling information 513 schedules the transmission of further DL user plane data to the UE 10 and/or schedules the transmission of further UL user plane data from the UE 10. In the example of Fig. 5, the CN 210 provides further DL user plane data 514 to the AN 100, which are further sent in a further DL radio transmission via the radio link to the UE 10, as illustrated by 515. The UE 10, then provides the received further DL user plane data to the APP 20, as illustrated by 516. This may again involve jitter compensated transmission of one or more data packets as described in connection with Fig. 3, with the further DL radio transmission being scheduled by the new scheduling information 513. The new scheduling information 513 may for example indicate radio resources to be used for the DL radio transmission, e.g., in terms of one or more resource blocks. In the case of the UE 10 having multi-link connectivity, the new scheduling information 513 may also include information for selection of one or more radio links to be used for the DL radio transmission. Further, Fig. 5 illustrates that the APP 20 provides further UL user plane data 517 to the UE 10, which are further sent in a UL radio transmission via the radio link to the AN 100, as illustrated by 518. The AN 100, then provides the received further UL user plane data to the CN 210, as illustrated by 519. This may involve jitter compensated transmission of one or more data packets as described in connection with Fig. 4, with the further UL radio transmission being scheduled by the new scheduling information 513. The new scheduling information 513 may for example indicate radio resources to be used for the UL radio transmission, e.g., in terms of one or more resource blocks. In the case of the UE 10 having multi-link connectivity, the new scheduling information 513 may also include information for selection of one or more radio links to be used for the UL radio transmission.

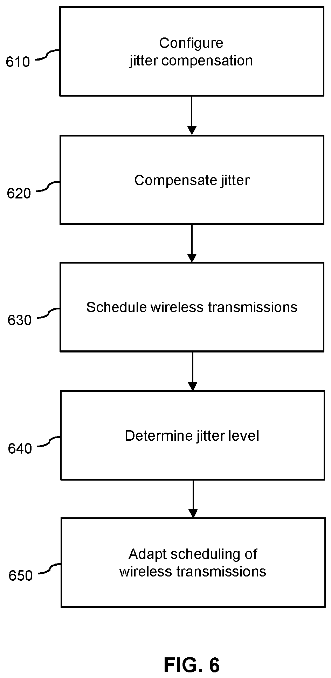

Fig. 6 shows a flowchart for illustrating a method, which may be utilized for implementing the illustrated concepts. The method of Fig. 6 may be used for implementing the illustrated concepts in an access node of a wireless communication network, e.g., corresponding to the above-mentioned access node 100. In the method of Fig. 6, the access node is assumed to be wirelessly connected to a wireless device, e.g., corresponding to one of the above-mentioned UEs 10.

If a processor-based implementation of the access node is used, at least some of the steps of the method of Fig. 6 may be performed and/or controlled by one or more processors of the access node. Such access node may also include a memory storing program code for implementing at least some of the below described functionalities or steps of the method of Fig. 6.

At step 610, the access node may configure jitter compensation between the access node and the wireless device. This may involve configuring one or more playout buffers for data conveyed by wireless transmissions between the access node and the wireless device. The above-mentioned DL playout buffer and UL playout buffer are examples of such playout buffers. The configuration of the jitter compensation may for example include setting a size of the playout buffer depending on an allowable maximum latency of the data and/or depending on an expected amount of jitter to be compensated. The configuration of the jitter compensation may also involve that the access node sends configuration information to the wireless device, such as one of the above-mentioned UEs 10. Such configuration information may for example configure a playout buffer implemented at the wireless device, such as the above-mentioned DL playout buffer.

At step 620, the access node may compensate jitter of wireless transmissions received from the wireless device based on buffering UL data from the received wireless transmissions for at most a configured maximum UL playout delay. For example, this may involve buffering of the received UL data in the above-mentioned UL playout buffer of the access node 100. The maximum UL playout delay may then correspond to the value of $tconf_{UL}$.

At step 630, the access node schedules wireless transmissions between the access node and the wireless device. The wireless transmissions may for example convey data of a TSN application or TSN service. The scheduling of step 630 may for example involve allocating resources to be used for the wireless transmissions and/or selecting a radio link of a multi-link connectivity configuration providing multiple radio links between the wireless device and the wireless communication network.

At step 640, the access node determines a level of jitter of the wireless transmissions. The access node may determine the level of jitter based on latency of data conveyed by the wireless transmissions exceeding a threshold. In some scenarios, the access node may determine the level of jitter based on one or more reports from the wireless device. For example, the wireless device could be configured to compensate the jitter of wireless transmissions received from the wireless communication network based on buffering DL data from the received wireless transmissions for at most a configured maximum DL playout delay. For example, the wireless device could buffer the received DL data in the above-mentioned DL playout buffer. The maximum DL playout delay could then correspond to the value of $tconf_{DL}$. The one or more reports from the wireless device can then be based on observed latency of the DL data exceeding the configured maximum DL playout delay and/or on observed latency of the DL data exceeding a configured threshold which is lower than the configured maximum DL playout delay, e.g., a fraction of the maximum DL playout delay. In some scenarios step 640 may involve that the access node receives at least one MAC message, e.g., a MAC CE, with the at least one of the one or more reports being conveyed by the at least one MAC message. Alternatively or in addition, step 640 may involve that the access node receives at least one RRC message, with at least one of the one or more reports being conveyed by the at least one RRC message.

As mentioned in connection with step 620, in some scenarios the access node may compensate the jitter of wireless transmissions received from the wireless device based on buffering UL data from the received wireless transmissions for at most a configured maximum UL playout delay. In such case, the access node may determine the level of the jitter based on observed latency of the UL data exceeding the configured maximum UL playout delay and/or based on observed latency of the UL data exceeding a configured threshold which is lower than the configured maximum UL playout delay e.g., a fraction of the maximum UL playout delay.

At step 650, the access node adapts the scheduling of the wireless transmissions based on the level of jitter determined at step 640. This adaptation of the scheduling may involve that the access node prioritizes the wireless transmissions between the access node and the wireless device over other wireless transmissions, e.g., wireless transmissions of other wireless devices and/or wireless transmissions related to other applications or services. Alternatively or in addition, the adaptation of the scheduling may involve that the access node increases frequency of resource allocation to the wireless device and/or reduces time granularity of resource allocation to the wireless device. For example, the access node could increase the number of resource blocks allocated per time interval and/or shorten time slots of in which the resource blocks can be allocated. In some scenarios, the adaptation of the scheduling may involve that the access node provides an indication that a jitter requirement is not fulfilled. In some scenarios, the adaptation of the scheduling may involve that the access node provides a congestion indication. For example, such indication(s) could be provided from a PDCP layer to one or more higher layers. In some scenarios, the adaptation of the scheduling may involve that the access node adapts selection between multiple radio links established between the wireless device and the access node.

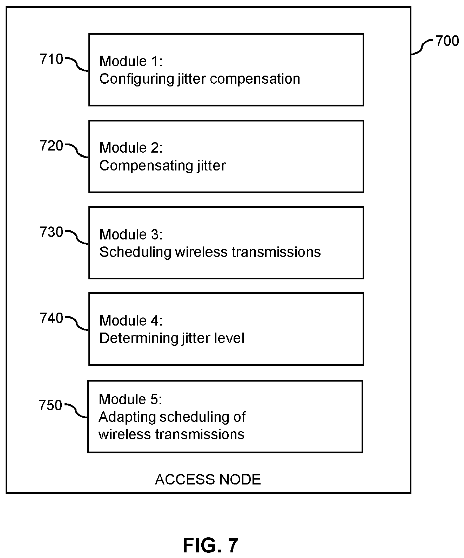

Fig. 7 shows a block diagram for illustrating functionalities of an access node 700 for a wireless communication network which operates according to the method of Fig. 6. The node 700 may for example correspond to the above-mentioned access node 100. As illustrated, the access node 700 may be provided with a module 710 configured to configure jitter compensation, such as explained in connection with step 610. Further, the access node 700 may be provided with a module 720 configured to compensate jitter, such as explained in connection with step 620. Further, the access node 700 may be provided with a module 730 configured to schedule wireless transmissions, such as explained in connection with step 630. Further, the access node 700 may be provided with a module 740 configured to determine a level of jitter, such as explained in connection with step 640. Further, the access node 700 may be provided with a module 750 configured to adapt the scheduling of the wireless transmissions based on the determined level of jitter, such as explained in connection with step 650.

It is noted that the access node 700 may include further modules for implementing other functionalities, such as known functionalities of a eNB in the LTE technology and/or a gNB in the NR technology. Further, it is noted that the modules of the access node 700 do not necessarily represent a hardware structure of the access node 700, but may also correspond to functional elements, e.g., implemented by hardware, software, or a combination thereof.

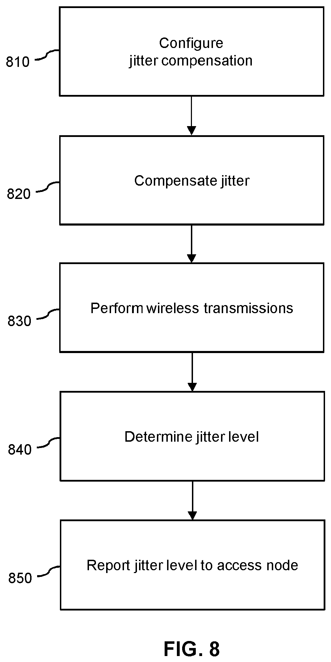

Fig. 8 shows a flowchart for illustrating a method, which may be utilized for implementing the illustrated concepts. The method of Fig. 8 may be used for implementing the illustrated concepts in a wireless device, e.g., corresponding to any of the above-mentioned UEs 10. In the method of Fig. 8, the wireless device is assumed to be wirelessly connected to an access node of the wireless communication network, e.g., corresponding to the above-mentioned access node 100.

If a processor-based implementation of the wireless device is used, at least some of the steps of the method of Fig. 8 may be performed and/or controlled by one or more processors of the wireless device. Such wireless device may also include a memory storing program code for implementing at least some of the below described functionalities or steps of the method of Fig. 8.

At step 810, the wireless device may configure jitter compensation between the access node and the wireless device. This may involve configuring one or more playout buffers for data conveyed by wireless transmissions between the access node and the wireless device. The above-mentioned DL playout buffer and UL playout buffer are examples of such playout buffers. The configuration of the jitter compensation may for example include setting a size of the playout buffer depending on an allowable maximum latency of the data and/or depending on an expected amount of jitter to be compensated. The configuration of the jitter compensation may also involve that the access node sends configuration information to the wireless device, such as one of the above-mentioned UEs 10. Such configuration information may for example configure a playout buffer implemented at the wireless device, such as the above-mentioned DL playout buffer.

At step 820, the wireless device may compensate jitter of wireless transmissions received from the wireless communication network based on buffering DL data from the received wireless transmissions for at most a configured maximum DL playout delay. For example, this may involve buffering of the received DL data in the above-mentioned DL playout buffer of the UE 10. The maximum DL playout delay may then correspond to the value of $tconf_{DL}$. In a similar manner, the access node may be configured to compensate the jitter of wireless transmissions received from the wireless device based on buffering uplink data from the received wireless transmissions for at most a configured maximum UL playout delay. The maximum UL playout delay may then correspond to the value of $tconf_{UL}$.

At step 830, the wireless device performs wireless transmissions based on scheduling by the access node. These wireless transmissions may include one or more DL wireless transmissions from the wireless communication network to the wireless device and/or one or more UL wireless transmissions from the wireless device to the wireless communication network. The scheduling may be based on scheduling information provided from the access node to the wireless device, such as the above-mentioned scheduling information 503, 513.

At step 840, the wireless device determines a level of jitter of the wireless transmissions. The wireless may determine the level of jitter based on latency of UL data conveyed by the wireless transmissions exceeding a threshold. For example, as mentioned in connection with step 820, the wireless device may compensate the jitter of wireless transmissions received from the access node based on buffering DL data from the received wireless transmissions for at most a configured maximum DL playout delay. The wireless device may then determine the level of jitter based on observed latency of the DL data exceeding the configured maximum DL playout delay and/or on observed latency of the DL data exceeding a configured threshold which is lower than the configured maximum DL playout delay, e.g., a fraction of the maximum DL playout delay.

At step 850, the wireless device sends one or more reports to the access node. The one or more reports indicate the level of jitter determined at step 840, to enable adaptation of the scheduling based on the level of jitter. In some scenarios step 850 may involve that the wireless device sends at least one MAC message, e.g., a MAC CE, with the at least one of the one or more reports being conveyed by the at least one MAC message. Alternatively or in addition, step 850 may involve that the wireless device sends at least one RRC message, with at least one of the one or more reports being conveyed by the at least one RRC message.

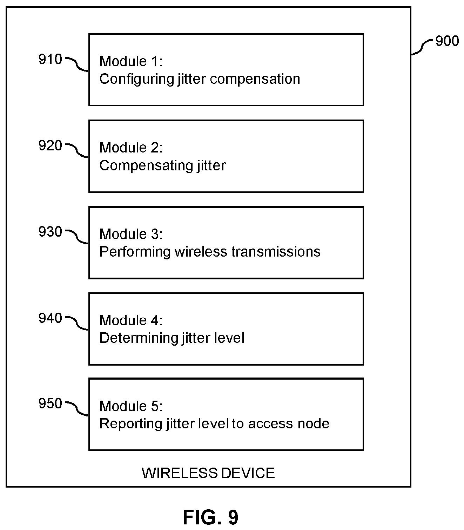

Fig. 9 shows a block diagram for illustrating functionalities of a wireless device 900 which operates according to the method of Fig. 8. The wireless device 900 may for example correspond to any of the above-mentioned UEs 10. As illustrated, the wireless device 900 may be provided with a module 910 configured to configure jitter compensation, such as explained in connection with step 810. Further, the wireless device 900 device may be provided with a module 920 configured to compensate jitter, such as explained in connection with step 820. Further, the wireless device 900 may be provided with a module 930 configured to perform scheduled wireless transmissions, such as explained in connection with step 830. Further, the wireless device 900 may be provided with a module 940 configured to determine a level of jitter of the scheduled wireless transmissions, such as explained in connection with step 840. Further, the wireless device 900 may be provided with a module 940 configured to send one or more reports indicating the determined level of jitter, such as explained in connection with step 850.

It is noted that the wireless device 900 may include further modules for implementing other functionalities, such as known functionalities of a UE in the LTE and/or NR radio technology. Further, it is noted that the modules of the wireless device 900 do not necessarily represent a hardware structure of the wireless device 900, but may also correspond to functional elements, e.g., implemented by hardware, software, or a combination thereof.

It is to be understood that the functionalities as described in connection with Figs. 6 to 9 may also be combined in various ways, e.g., in a system which includes at least one access node operating according to the method of Fig. 6 and at least one wireless device operating according to the method of Fig. 8.

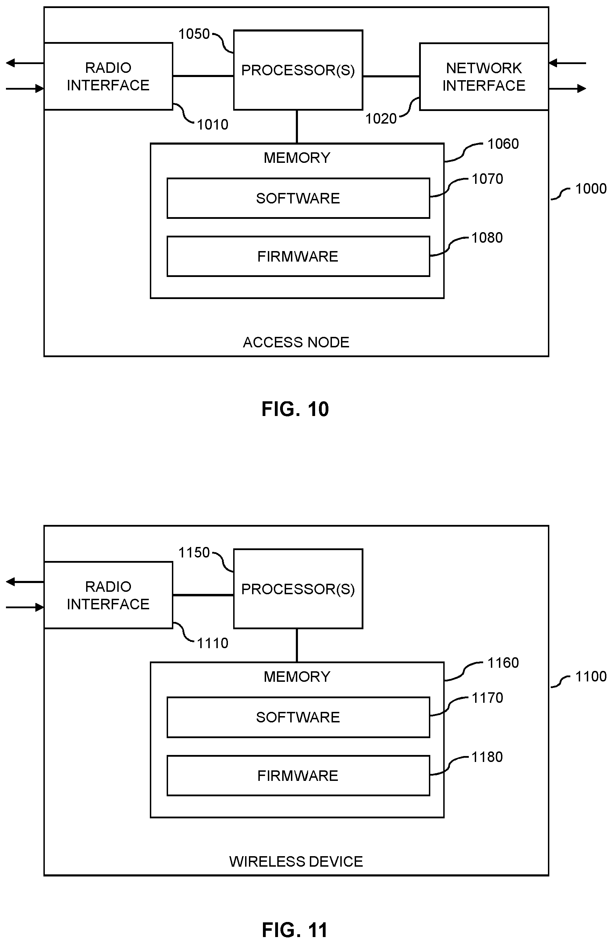

Fig. 10 illustrates a processor-based implementation of an access node 1000 for a wireless communication network, which may be used for implementing the above-described concepts.

For example, the structures as illustrated in Fig. 10 may be used for implementing the concepts in the above-mentioned access node 100.

As illustrated, the access node 1000 may include one or more radio interfaces 1010. The radio interface(s) 1010 may for example be based on the NR technology or the LTE technology. The radio interface(s) 1010 may be used for connecting to wireless devices, such as any of the above-mentioned UEs 10. In addition, the access node 1000 may include one or more network interfaces 1020. The network interface(s) 1020 may for example be used for communication with one or more other nodes of the wireless communication network, e.g., to CN nodes.

Further, the access node 1000 may include one or more processors 1050 coupled to the interface(s) 1010, 1020 and a memory 1060 coupled to the processor(s) 1050. By way of example, the interface(s) 1010, the processor(s) 1050, and the memory 1060 could be coupled by one or more internal bus systems of the node 1000. The memory 1060 may include a read-only memory (ROM), e.g., a flash ROM, a random-access memory (RAM), e.g., a dynamic RAM (DRAM) or static RAM (SRAM), a mass storage, e.g., a hard disk or solid state disk, or the like. As illustrated, the memory 1060 may include software 1070 and/or firmware 1080. The memory 1060 may include suitably configured program code to be executed by the processor(s) 1050 so as to implement the above-described functionalities for compensating jitter, such as explained in connection with Fig. 6.

It is to be understood that the structures as illustrated in Fig. 10 are merely schematic and that the access node 1000 may actually include further components which, for the sake of clarity, have not been illustrated, e.g., further interfaces, such as a dedicated management interface, or further processors. Also, it is to be understood that the memory 1060 may include further program code for implementing known functionalities of an eNB or of a gNB. According to some embodiments, also a computer program may be provided for implementing functionalities of the access node 1000, e.g., in the form of a physical medium storing the program code and/or other data to be stored in the memory 1060 or by making the program code available for download or by streaming.

Fig. 11 illustrates a processor-based implementation of a wireless communication device 1100 which may be used for implementing the above-described concepts. For example, the structures as illustrated in Fig. 11 may be used for implementing the concepts in any of the above-mentioned UEs.

As illustrated, the wireless device 1100 includes one or more radio interfaces 1110. The radio interface(s) 1110 may for example be based on the NR technology or the LTE technology. The radio interface(s) 1110 may be used for providing connectivity of the wireless device to a wireless communication network, e.g., via one or more access nodes of the wireless communication network, such as the above-mentioned access node 100, 700, or 1000.

Further, the wireless device 1100 may include one or more processors 1150 coupled to the radio interface(s) 1110 and a memory 1160 coupled to the processor(s) 1150. By way of example, the radio interface(s) 1110, the processor(s) 1150, and the memory 1160 could be coupled by one or more internal bus systems of the wireless device 1100. The memory 1160 may include a ROM, e.g., a flash ROM, a RAM, e.g., a DRAM or SRAM, a mass storage, e.g., a hard disk or solid state disk, or the like. As illustrated, the memory 1160 may include software 1170 and/or firmware 1180. The memory 1160 may include suitably configured program code to be executed by the processor(s) 1150 so as to implement the above-described functionalities for compensating jitter, such as explained in connection with Fig. 8.

It is to be understood that the structures as illustrated in Fig. 11 are merely schematic and that the wireless device 1100 may actually include further components which, for the sake of clarity, have not been illustrated, e.g., further interfaces, such as a dedicated management interface, or further processors. Also, it is to be understood that the memory 1160 may include further program code for implementing known functionalities of a UE. According to some embodiments, also a computer program may be provided for implementing functionalities of the wireless device 1100, e.g., in the form of a physical medium storing the program code and/or other data to be stored in the memory 1160 or by making the program code available for download or by streaming.

As can be seen, the concepts as described above may be used for efficiently compensating jitter that may occur in a RAN. As a result, the concepts may help to better support jitter-sensitive applications or services, such as TSN applications or services.

It is to be understood that the examples and embodiments as explained above are merely illustrative and susceptible to various modifications. For example, the illustrated concepts may be applied in connection with various kinds of radio technologies. Further, the concepts may be applied with respect to various types of UEs. Further, the concepts may be applied in connection with various applications or services, without limitation to TSN applications or services. It is also noted that it would be possible to implement the jitter compensation by the playout buffer(s) independently of the jitter compensation by jitter-level dependent scheduling.

Moreover, it is to be understood that the above concepts may be implemented by using correspondingly designed software to be executed by one or more processors of an existing device or apparatus, or by using dedicated device hardware. Further, it should be noted that the illustrated apparatuses or devices may each be implemented as a single device or as a system of multiple interacting devices or modules.

**Claims**

1. A method of controlling wireless communication, the method comprising:

    an access node (100; 700; 1000) of a wireless communication network scheduling wireless transmissions between the wireless communication network and a wireless device (10; 900; 1100);
    the access node (100; 700; 1000) determining a level of jitter of the wireless transmissions; and
    based on the determined level of jitter, the access node (100; 700; 1000) adapting the scheduling of the wireless transmissions.

2. The method according to claim 1,
    wherein the access node (100; 700; 1000) determines the level of jitter based on latency of data conveyed by the wireless transmissions exceeding a threshold.

3. The method of claim 1 or 2, comprising:

    wherein the access node (100; 700; 1000) determines the level of jitter based on one or more reports (511) from the wireless device (10; 900; 1100),
    wherein the wireless device (10; 900; 1100) is configured to compensate the jitter of wireless transmissions received from the wireless communication network based on buffering downlink data from the received wireless transmissions for at most a configured first maximum playout delay, and
    wherein the one or more reports (511) from the wireless device (10; 900; 1100) are based on:

        - observed latency of the downlink data exceeding the configured first maximum playout delay, or
        - observed latency of the downlink data exceeding a configured first threshold which is lower than the configured first maximum playout delay.

4. The method according to claim 3, comprising:

    the access node (100; 700; 1000) receiving at least one Medium Access Control, MAC, message, wherein at least one of the one or more reports is conveyed by the at least one MAC message; and/or
    the access node (100; 700; 1000) receiving at least one RRC, Radio Resource Control, message, wherein at least one of the one or more reports is conveyed by the at least one RRC message.

5. The method of any one of the preceding claims,

    wherein the access node (100; 700; 1000) compensates the jitter of wireless transmissions received from the wireless device (10; 900; 1100) based on buffering uplink data from the received wireless transmissions for at most a configured second maximum playout delay, and
    wherein the access node (100; 700; 1000) determines the level of the jitter based on observed latency of the uplink data exceeding the configured second maximum playout delay and/or based on observed latency of the uplink data exceeding a configured second threshold which is lower than the configured second maximum playout delay.

6. The method according to any one of the preceding claims,
    wherein said adapting the scheduling of the wireless transmissions comprises:

the access node (100; 700; 1000) prioritizing the wireless transmissions between the access node and the wireless device (10; 900; 1100) over other wireless transmissions; and/or

the access node (100; 700; 1000) increasing frequency of resource allocation to the wireless device; and/or

the access node (100; 700; 1000) reducing time granularity of resource allocation to the wireless device (10; 900; 1100); and/or

the access node (100; 700; 1000) providing an indication that a jitter requirement is not fulfilled; and/or

the access node (100; 700; 1000) providing an congestion indication; and/or

the access node (100; 700; 1000) adapting selection between multiple radio links established between the wireless device (10; 900; 1100) and the access node (100; 700; 1000).

7. A method of controlling wireless communication, the method comprising:

a wireless device (10; 900; 1100) performing wireless transmissions between a wireless communication network and the wireless device (10; 900; 1100) based on scheduling by an access node (100; 700; 1000) of the wireless communication network;

the wireless device (10; 900; 1100) determining a level of jitter of the wireless transmissions; and

the wireless device (10; 900; 1100) sending one or more reports (511) indicating the determined level of jitter to the access node (100; 700; 1000), to enable adaptation of the scheduling based on the level of jitter.

8. The method according to claim 7,

wherein the wireless device (10; 900; 1100) determines the level of jitter based on latency of uplink data conveyed by the wireless transmissions exceeding a threshold.

9. The method of claim 7 or 8,

wherein the wireless device (10; 900; 1100) compensates the jitter of wireless transmissions received from the wireless communication network based on buffering downlink data from the received wireless transmissions for at most a configured first maximum playout delay, and

wherein the one or more reports (511) are based on observed latency of the downlink data exceeding the configured first maximum playout delay or based on observed latency of the downlink data exceeding a configured first threshold which is lower than the configured first maximum playout delay.

10. The method of any one of claims 7 to 9, comprising:

the wireless device (10; 900; 1100) sending at least one Medium Access Control, MAC, message, wherein at least one of the one or more reports is conveyed by the at least one MAC message; and/or

the wireless device (10; 900; 1100) sending at least one RRC, Radio Resource Control, message, wherein at least one of the one or more reports is conveyed by the at least one RRC message.

11. The method according to any one of claims 7 to 10,

wherein the wireless transmissions between the wireless device (10; 900; 1100) and the wireless communication network convey data of a Time Sensitive Networking, TSN, application.

12. An access node (100; 700; 1000) for a wireless communication network, the access node (100; 700; 1000) being configured to:

schedule wireless transmissions between the wireless communication network and a wireless device (10; 900; 1100);

determine a level of jitter of the wireless transmissions; and

based on the determined level of jitter, adapt the scheduling of the wireless transmissions.

13. The access node (100; 700; 1000) according to claim 12,

wherein the access node (100; 700; 1000) is configured to perform a method according to any one of claims 2 to 6.

14. A wireless device (10; 900; 1100) for operation in a wireless communication network, the wireless device (10; 900; 1100) being configured to:

perform wireless transmissions between a wireless communication network and the wireless device (10; 900;

1100) based on scheduling by an access node (100; 700 1000) of the wireless communication network; determine a level of jitter of the wireless transmissions; and

send one or more reports (511) indicating the determined level of jitter to the access node (100; 700; 1000), to enable adaptation of the scheduling based on the level of jitter.

15. The wireless device (10; 900; 1100) according to claim 14,
wherein the wireless device (10; 900; 1100) is configured to perform a method according to any one of claims 8 to 11.


**Patentansprüche**

1. Verfahren zur Steuerung von drahtloser Kommunikation, wobei das Verfahren umfasst, dass:

ein Zugangsknoten (100; 700; 1000) eines drahtlosen Kommunikationsnetzwerks drahtlose Übertragungen zwischen dem drahtlosen Kommunikationsnetzwerk und einer drahtlosen Vorrichtung (10; 900; 1100) disponiert;
der Zugangsknoten (100; 700; 1000) einen Jitter-Pegel der drahtlosen Übertragungen bestimmt; und
der Zugangsknoten (100; 700; 1000) die Disposition der drahtlosen Übertragungen basierend auf dem bestimmten Jitter-Pegel anpasst.

2. Verfahren nach Anspruch 1,
wobei der Zugangsknoten (100; 700; 1000) den Jitter-Pegel basierend darauf bestimmt, dass eine Latenz von Daten, die durch die drahtlosen Übertragungen übermittelt werden, einen Schwellenwert überschreitet.

3. Verfahren nach Anspruch 1 oder 2, umfassend:

wobei der Zugangsknoten (100; 700; 1000) den Jitter-Pegel basierend auf einem oder mehreren Berichten (511) von der drahtlosen Vorrichtung (10; 900; 1100) bestimmt,
wobei die drahtlose Vorrichtung (10; 900; 1100) dazu konfiguriert ist, den Jitter von drahtlosen Übertragungen, die von dem drahtlosen Kommunikationsnetzwerk empfangen werden, basierend auf einem Puffern von Downlink-Daten aus den empfangenen drahtlosen Übertragungen für höchstens eine konfigurierte erste maximale Wiedergabeverzögerung zu kompensieren, und
wobei der eine oder die mehreren Berichte (511) von der drahtlosen Vorrichtung (10; 900; 1100) darauf basieren, dass:

- eine beobachtete Latenz der Downlink-Daten die konfigurierte erste maximale Wiedergabeverzögerung überschreitet, oder
- eine beobachtete Latenz der Downlink-Daten einen konfigurierten ersten Schwellenwert überschreitet, der niedriger als die konfigurierte erste maximale Wiedergabeverzögerung ist.

4. Verfahren nach Anspruch 3, umfassend, dass:

der Zugangsknoten (100; 700; 1000) mindestens eine Medium Access Control-Nachricht, MAC-Nachricht, empfängt, wobei mindestens einer des einen oder mehreren Berichte durch die mindestens eine MAC-Nachricht übermittelt wird; und/oder
der Zugangsknoten (100; 700; 1000) mindestens eine Radio Ressource Control-Nachricht, RRC-Nachricht, empfängt, wobei mindestens einer des einen oder mehreren Berichte durch die mindestens eine RRC-Nachricht übermittelt wird.

5. Verfahren nach einem der vorhergehenden Ansprüche,

wobei der Zugangsknoten (100; 700; 1000) den Jitter von drahtlosen Übertragungen, die von der drahtlosen Vorrichtung (10; 900; 1100) empfangen werden, basierend auf einem Puffern von Uplink-Daten aus den empfangenen drahtlosen Übertragungen für höchstens eine konfigurierte zweite maximale Wiedergabeverzögerung kompensiert, und
wobei der Zugangsknoten (100; 700; 1000) den Jitter-Pegel basierend darauf, dass eine beobachtete Latenz der Uplink-Daten die konfigurierte zweite maximale Wiedergabeverzögerung überschreitet, und/oder basierend darauf, dass eine beobachtete Latenz der Uplink-Daten einen konfigurierten Schwellenwert überschreitet, der niedriger als die konfigurierte zweite maximale Wiedergabeverzögerung ist.

**6.** Verfahren nach einem der vorhergehenden Ansprüche,
wobei das Anpassen der Disposition der drahtlosen Übertragungen umfasst, dass:

der Zugangsknoten (100; 700; 1000) die drahtlosen Übertragungen zwischen dem Zugangsknoten und der drahtlosen Vorrichtung (10; 900; 1100) gegenüber anderen drahtlosen Übertragungen priorisiert; und/oder
der Zugangsknoten (100; 700; 1000) die Häufigkeit der Ressourcenzuweisung zu der drahtlosen Vorrichtung erhöht; und/oder
der Zugangsknoten (100; 700; 1000) die zeitliche Granularität der Ressourcenzuweisung zu der drahtlosen Vorrichtung (10; 900; 1100) reduziert; und/oder
der Zugangsknoten (100; 700; 1000) eine Angabe bereitstellt, dass eine Jitter-Anforderung nicht erfüllt wird; und/oder
der Zugangsknoten (100; 700; 1000) eine Überlastungsangabe bereitstellt; und/oder
der Zugangsknoten (100; 700; 1000) eine Auswahl zwischen mehreren Funkverbindungen anpasst, die zwischen der drahtlosen Vorrichtung (10; 900; 1100) und dem Zugangsknoten (100; 700; 1000) hergestellt werden.

**7.** Verfahren zur Steuerung von drahtloser Kommunikation, wobei das Verfahren umfasst, dass:

eine drahtlose Vorrichtung (10; 900; 1100) drahtlose Übertragungen zwischen einem drahtlosen Kommunikationsnetzwerk und der drahtlosen Vorrichtung (10; 900; 1100) basierend auf Disposition durch einen Zugangsknoten (100; 700; 1000) des drahtlosen Kommunikationsnetzwerks durchführt;
wobei die drahtlose Vorrichtung (10; 900; 1100) einen Jitter-Pegel der drahtlosen Übertragungen bestimmt; und
die drahtlose Vorrichtung (10; 900; 1100) einen oder mehrere Berichte (511) sendet, die dem Zugangsknoten (100; 700; 1000) den bestimmten Jitter-Pegel angeben, um Anpassung der Disposition basierend auf dem Jitter-Pegel zu ermöglichen.

**8.** Verfahren nach Anspruch 7,
wobei die drahtlose Vorrichtung (10; 900; 1100) den Jitter-Pegel basierend darauf bestimmt, dass eine Latenz von Uplink-Daten, die durch die drahtlosen Übertragungen übermittelt werden, einen Schwellenwert überschreitet.

**9.** Verfahren nach Anspruch 7 oder 8,

wobei die drahtlose Vorrichtung (10; 900; 1100) den Jitter von drahtlosen Übertragungen, die von dem drahtlosen Kommunikationsnetzwerk empfangen werden, basierend auf einem Puffern von Downlink-Daten aus den empfangenen drahtlosen Übertragungen für höchstens eine konfigurierte erste maximale Wiedergabeverzögerung kompensiert, und
wobei der eine oder die mehreren Berichte (511) darauf basieren, dass eine beobachtete Latenz der Downlink-Daten die konfigurierte erste maximale Wiedergabeverzögerung überschreitet, und/oder darauf basieren, dass eine beobachtete Latenz der Downlink-Daten einen konfigurierten Schwellenwert überschreitet, der niedriger als die konfigurierte erste maximale Wiedergabeverzögerung ist.

**10.** Verfahren nach einem der Ansprüche 7 bis 9, umfassend:

die drahtlose Vorrichtung (10; 900; 1100) mindestens eine Medium Access Control-Nachricht, MAC-Nachricht, sendet, wobei mindestens einer des einen oder mehreren Berichte durch die mindestens eine MAC-Nachricht übermittelt wird; und/oder
die drahtlose Vorrichtung (10; 900; 1100) mindestens eine Radio Ressource Control-Nachricht, RRC-Nachricht, sendet, wobei mindestens einer des einen oder mehreren Berichte durch die mindestens eine RRC-Nachricht übermittelt wird.

**11.** Verfahren nach einem der Ansprüche 7 bis 10,
wobei die drahtlosen Übertragungen zwischen der drahtlosen Vorrichtung (10; 900; 1100) und dem drahtlosen Kommunikationsnetzwerk Daten einer Time Sensitive Networking-Anwendung, TSN-Anwendung, übermitteln.

**12.** Zugangsknoten (100; 700; 1000) für ein drahtloses Kommunikationsnetzwerk, wobei der Zugangsknoten (100; 700; 1000) zu Folgendem konfiguriert ist:

Disponieren von drahtlosen Übertragungen zwischen dem drahtlosen Kommunikationsnetzwerk und einer drahtlosen Vorrichtung (10; 900; 1100);

Bestimmen eines Jitter-Pegels der drahtlosen Übertragungen; und

Anpassen der Disposition der drahtlosen Übertragungen basierend auf dem bestimmten Jitter-Pegel.

13. Zugangsknoten (100; 700; 1000) nach Anspruch 12,
wobei der Zugangsknoten (100; 700; 1000) zum Durchführen eines Verfahrens nach einem der Ansprüche 2 bis 6 konfiguriert ist.

14. Drahtlose Vorrichtung (10; 900; 1100) für Betrieb in einem Drahtloskommunikationsnetzwerk, wobei die drahtlose Vorrichtung (10; 900; 1100) zu Folgendem konfiguriert ist:

Durchführen von drahtlosen Übertragungen zwischen einem drahtlosen Kommunikationsnetzwerk und der drahtlosen Vorrichtung (10; 900; 1100) basierend auf Disposition durch einen Zugangsknoten (100; 700: 1000) des drahtlosen Kommunikationsnetzwerks;

Bestimmen eines Jitter-Pegels der drahtlosen Übertragungen; und

Senden eines oder mehrerer Berichte (511), die dem Zugangsknoten (100; 700; 1000) den bestimmten Jitter-Pegel angeben, um Anpassung der Disposition basierend auf dem Jitter-Pegel zu ermöglichen.

15. Drahtlose Vorrichtung (10; 900; 1100) nach Anspruch 14,
wobei die drahtlose Vorrichtung (10; 900; 1100) zum Durchführen eines Verfahrens nach einem der Ansprüche 8 bis 11 konfiguriert ist.

**Revendications**

1. Procédé de commande de communication sans fil, le procédé comprenant :

par un nœud d'accès (100 ; 700 ; 1000) d'un réseau de communication sans fil, la planification de transmissions sans fil entre le réseau de communication sans fil et un dispositif sans fil (10 ; 900 ; 1100) ;
par le nœud d'accès (100 ; 700 ; 1000), la détermination d'un niveau de gigue des transmissions sans fil ; et
sur la base du niveau de gigue déterminé, l'adaptation, par le nœud d'accès (100 ; 700 ; 1000), de la planification des transmissions sans fil.

2. Procédé selon la revendication 1,
dans lequel le nœud d'accès (100 ; 700 ; 1000) détermine le niveau de gigue sur la base du fait qu'une latence de données portées par les transmissions sans fil dépasse un seuil.

3. Procédé selon la revendication 1 ou 2, comprenant :

dans lequel le nœud d'accès (100 ; 700 ; 1000) détermine le niveau de gigue sur la base d'un ou plusieurs rapports (511) émanant du dispositif sans fil (10 ; 900 ; 1100),
dans lequel le dispositif sans fil (10 ; 900 ; 1100) est configuré pour compenser la gigue de transmissions sans fil reçues depuis le réseau de communication sans fil sur la base de la mise en mémoire tampon de données de liaison descendante émanant des transmissions sans fil reçues pendant au plus un premier retard de lecture maximal configuré, et
dans lequel les un ou plusieurs rapports (511) émanant du dispositif sans fil (10 ; 900 ; 1100) sont sur la base de :

- le fait qu'une latence observée des données de liaison descendante dépasse le premier retard de lecture maximal configuré, ou
- le fait qu'une latence observée des données de liaison descendante dépasse un premier seuil configuré qui est inférieur au premier retard de lecture maximal configuré.

4. Procédé selon la revendication 3, comprenant :

par le nœud d'accès (100 ; 700 ; 1000), la réception d'au moins un message de commande d'accès au support, MAC, dans lequel au moins l'un des un ou plusieurs rapports est porté par l'au moins un message MAC ; et/ou
par le nœud d'accès (100 ; 700 ; 1000), la réception d'au moins un message de commande de ressources radio, RRC, dans lequel au moins l'un des un ou plusieurs rapports est porté par l'au moins un message RRC.

**5.** Procédé selon l'une quelconque des revendications précédentes,

dans lequel le nœud d'accès (100 ; 700 ; 1000) compense la gigue de transmissions sans fil reçues depuis le dispositif sans fil (10 ; 900 ; 1100) sur la base de la mise en mémoire tampon de données de liaison montante émanant des transmissions sans fil reçues pendant au plus un deuxième retard de lecture maximal configuré, et dans lequel le nœud d'accès (100 ; 700 ; 1000) détermine le niveau de la gigue sur la base du fait qu'une latence observée des données de liaison montante dépasse le deuxième retard de lecture maximal configuré et/ou sur la base du fait qu'une latence observée des données de liaison montante dépasse un deuxième seuil configuré qui est inférieur au deuxième retard de lecture maximal configuré.

**6.** Procédé selon l'une quelconque des revendications précédentes,
dans lequel ladite adaptation de la planification des transmissions sans fil comprend :

par le nœud d'accès (100 ; 700 ; 1000), la priorisation des transmissions sans fil entre le nœud d'accès et le dispositif sans fil (10 ; 900 ; 1100) par rapport à d'autres transmissions sans fil ; et/ou
par le nœud d'accès (100 ; 700 ; 1000), l'augmentation d'une fréquence d'attribution de ressources au dispositif sans fil ; et/ou
par le nœud d'accès (100 ; 700 ; 1000), la réduction d'une granularité temporelle d'attribution de ressources au dispositif sans fil (10 ; 900 ; 1100) ; et/ou
par le nœud d'accès (100 ; 700 ; 1000), la fourniture d'une indication qu'une exigence de gigue n'est pas remplie ; et/ou
par le nœud d'accès (100 ; 700 ; 1000), la fourniture d'une indication d'encombrement ; et/ou
par le nœud d'accès (100 ; 700 ; 1000), l'adaptation d'une sélection entre de multiples liaisons radio établies entre le dispositif sans fil (10 ; 900 ; 1100) et le nœud d'accès (100 ; 700 ; 1000).

**7.** Procédé de commande de communication sans fil, le procédé comprenant :

par un dispositif sans fil (10 ; 900 ; 1100), la réalisation de transmissions sans fil entre un réseau de communication sans fil et le dispositif sans fil (10 ; 900 ; 1100) sur la base d'une planification par un nœud d'accès (100 ; 700 ; 1000) du réseau de communication sans fil ;
par le dispositif sans fil (10 ; 900 ; 1100), la détermination d'un niveau de gigue des transmissions sans fil ; et
par le dispositif sans fil (10 ; 900 ; 1100), l'envoi d'un ou plusieurs rapports (511) indiquant le niveau de gigue déterminé au nœud d'accès (100 ; 700 ; 1000), pour permettre une adaptation de la planification sur la base du niveau de gigue.

**8.** Procédé selon la revendication 7,
dans lequel le dispositif sans fil (10 ; 900 ; 1100) détermine le niveau de gigue sur la base du fait qu'une latence de données de liaison montante portées par les transmissions sans fil dépasse un seuil.

**9.** Procédé selon la revendication 7 ou 8,

dans lequel le dispositif sans fil (10 ; 900 ; 1100) compense la gigue de transmissions sans fil reçues depuis le réseau de communication sans fil sur la base d'une mise en mémoire tampon de données de liaison descendante émanant des transmissions sans fil reçues pendant au plus un premier retard de lecture maximal configuré, et dans lequel les un ou plusieurs rapports (511) sont sur la base du fait qu'une latence observée des données de liaison descendante dépasse le premier retard de lecture maximal configuré, ou sur la base du fait qu'une latence observée des données de liaison descendante dépasse un premier seuil configuré qui est inférieur au premier retard de lecture maximal configuré.

**10.** Procédé selon l'une quelconque des revendications 7 à 9, comprenant :

par le dispositif sans fil (10 ; 900 ; 1100), l'envoi d'au moins un message de commande d'accès au support, MAC, dans lequel au moins l'un des un ou plusieurs rapports est porté par l'au moins un message MAC ; et/ou
par le dispositif sans fil (10 ; 900 ; 1100), l'envoi d'au moins un message de commande de ressources radio, RRC, dans lequel au moins l'un des un ou plusieurs rapports est porté par l'au moins un message RRC.

**11.** Procédé selon l'une quelconque des revendications 7 à 10,
dans lequel les transmissions sans fil entre le dispositif sans fil (10 ; 900 ; 1100) et le réseau de communication sans fil portent des données d'une application de réseautage sensible au temps, TSN.

12. Nœud d'accès (100 ; 700 ; 1000) d'un réseau de communication sans fil, le nœud d'accès (100 ; 700 ; 1000) étant configuré pour :

planifier des transmissions sans fil entre le réseau de communication sans fil et un dispositif sans fil (10 ; 900 ; 1100) ;
déterminer un niveau de gigue des transmissions sans fil ; et
sur la base du niveau de gigue déterminé, adapter la planification des transmissions sans fil.

13. Nœud d'accès (100 ; 700 ; 1000) selon la revendication 12,
dans lequel le nœud d'accès (100 ; 700 ; 1000) est configuré pour réaliser un procédé selon l'une quelconque des revendications 2 à 6.

14. Dispositif sans fil (10 ; 900 ; 1100) destiné à fonctionner dans un réseau de communication sans fil, le dispositif sans fil (10 ; 900 ; 1100) étant configuré pour :

réaliser des transmissions sans fil entre un réseau de communication sans fil et le dispositif sans fil (10 ; 900 ; 1100) sur la base d'une planification par un nœud d'accès (100 ; 700 ; 1000) du réseau de communication sans fil ;
déterminer un niveau de gigue des transmissions sans fil ; et
envoyer un ou plusieurs rapports (511) indiquant le niveau de gigue déterminé au nœud d'accès (100 ; 700 ; 1000), pour permettre une adaptation de la planification sur la base du niveau de gigue.

15. Dispositif sans fil (10 ; 900 ; 1100) selon la revendication 14,
dans lequel le dispositif sans fil (10 ; 900 ; 1100) est configuré pour réaliser un procédé selon l'une quelconque des revendications 8 à 11.

**FIG. 1**

**FIG. 2**

FIG. 3

**FIG. 4**

**FIG. 5**

FIG. 6

FIG. 7

**810** Configure jitter compensation

**820** Compensate jitter

**830** Perform wireless transmissions

**840** Determine jitter level

**850** Report jitter level to access node

**FIG. 8**

900

910 — Module 1:
Configuring jitter compensation

920 — Module 2:
Compensating jitter

930 — Module 3:
Performing wireless transmissions

940 — Module 4:
Determining jitter level

950 — Module 5:
Reporting jitter level to access node

WIRELESS DEVICE

**FIG. 9**

FIG. 10

FIG. 11

## REFERENCES CITED IN THE DESCRIPTION

**Patent documents cited in the description**

- WO 2020064215 A1

- US 20200107339 A1

**Non-patent literature cited in the description**

- *3GPP TS 38.331 V16.6.0*, September 2021